# EUROPEAN PATENT APPLICATION

(11) **EP 2 119 617 A1**
(43) Date of publication of application: **18.11.2009**
(21) Application number: 08425329.3
(22) Date of filing: 12.05.2008
(51) Int. Cl.: B62D 15/02, B60W 50/08

(54) **Vehicle driving aid system for lane changing assistance**

(71) Applicant: IVECO S.p.A., 10156 Torino (IT)
(72) Inventor: Vada, Maurizio, 14100 Asti (IT); Aimo Boot, Marco, 10072 Caselle Torinese (IT)
(74) Representative: Borsano, Corrado

(57) **Abstract**

This invention relates to a lane changing assistance system (LCA), comprising a radar system for controlling the lanes adjacent to that onto which the vehicle is travelling, which intervenes by applying an active steering torque to the vehicle or by providing appropriate warning signals.

## Description

This invention relates to a vehicle driving aid system, and more in particular to a vehicle driving aid system for lane changing assistance.

Vehicle driving aid, system for lane changing assistance are already known in the art.

For example, patent EP-1312506 describes a driving aid system suitable for assisting the driver in a lane-change manoeuvre, by signalling potential dangers, i. e. vehicles approaching in the adjacent lanes which may collide with the assisted vehicle during the lane-change manoeuvre.

The systems of the type known, in order to obtain a monitoring system of the lateral lane, use an external video camera, preferably integrated in the lateral rear-view mirror, that provides an output signal suitable for detecting the presence and the movement of another vehicle in the adjacent lane.

This system, however, is not the optimal system, because the detection range does not exceed the length of the vehicle, therefore it cannot correctly detect the vehicles approaching at high speed from a long distance, which may negatively interfere with the normal driver's reaction time to obstacles.

Therefore these known solutions provide limited levels of driving assistance, that are not sufficient in order to guarantee a thorough assistance in all dangerous driving situations.

Therefore the aim of this invention is to provide a lane changing assistance system that solves all the problems set forth above.

This invention relates to a vehicle lane changing assistance system which comprises:
a lane detection module, comprising a system able to process the images and to detect the geometry of the road and the vehicle trajectory with respect to the traffic lane;
a lateral detection module, comprising a radar system able to detect objects in the adjacent lanes and to measure their position and speed;
a vehicle data module, able to detect the data on vehicular parameters;
a control module of haptic reaction, able to receive signals from said lane and lateral detection modules, and vehicle data module, and to provide a counteracting torque to be transmitted to the vehicle steering system.

Preferably the lane changing assistance module (LCAM) allows to prevent the emergency condition generated by the approaching of another vehicle along the same lane onto which the vehicle changing the lane is travelling, by means of an appropriate steering intervention, that is by applying an active steering torque that prevents the driver to carry out a lane-change manoeuvre in dangerous conditions.

This invention refers in particular to a vehicle driving aid system for lane changing assistance, as described more fully in the claims, which are an integral part of this description.

The purposes and advantages of this invention will become clear from the following detailed description of a preferred embodiment (and the relative alternative forms of embodiment) and the drawings that are attached hereto, which are merely illustrative and not limitative, in which:
- figures from 1.1 to 1.5 show the diagram of typical situations of road circulation wherein the lane changing assistance system according to this invention is applied;
- figures 2.1 and 2.2 show respectively the diagrams of the road bending radius and of the vehicle trajectory with respect to the traffic lane;
- figures from 3.1 to 3.4 show two positioning variants of the radars on the vehicle;
- figure 4 shows a functional block diagram of the driving aid system according to this invention;
- figure 5 shows a diagram of the counteracting torque applied to the steering by the system;
- figure 6 shows a finite state diagram of the functioning of the software of the system.

In the figures the same reference numbers and letters are used to identify the same components or functionally equivalent components, elements or magnitudes.

The system that is object of the invention is now described in detail in reference to its main constituent modules.

The lane changing assistance system, from now on called LCA, comprises two main functions:
- checking of the presence of vehicles in adjacent zones, i.e. in parallel on the lateral lane (blind spot monitoring);
- checking of the vehicles approaching from behind, with the evaluation of the distance and of the approaching relative speed (closing vehicle monitoring).
The LCA system informs the driver of the presence of vehicles according to the two functions described above, both in case the vehicle keeps its lane and in case the driver attempts a lane-change manoeuvre.

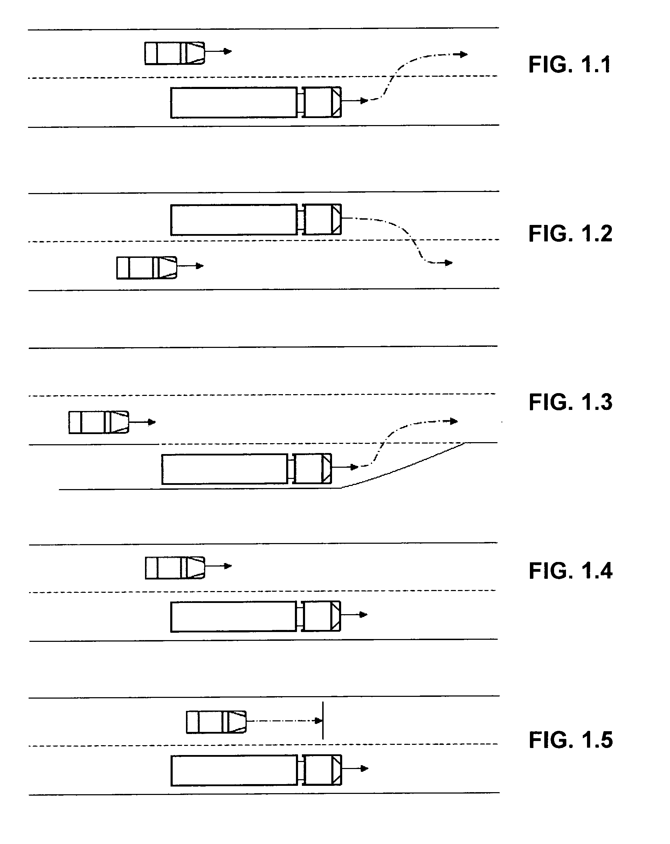

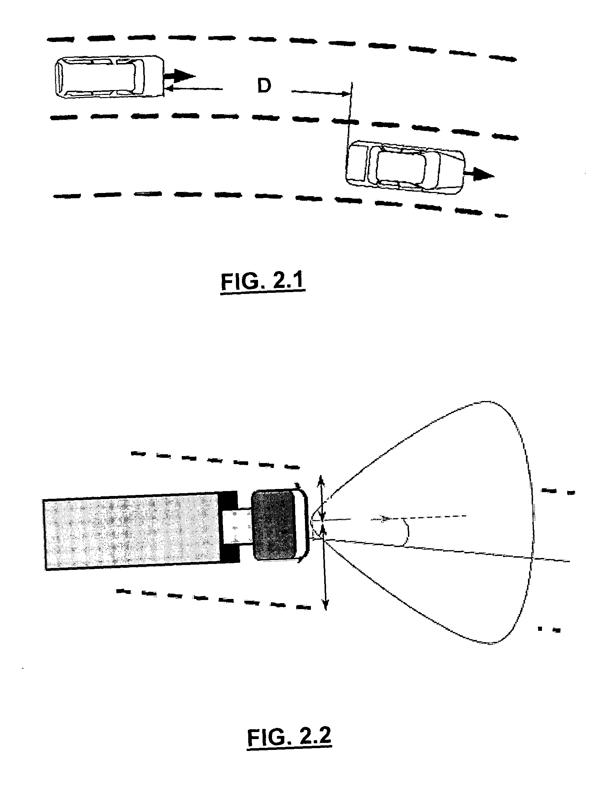

Therefore the LCA system has two purposes: firstly it informs the driver of the presence of vehicles in the blind spot (when the direction indicator is activated); secondly it warns the driver in case he/she attempts dangerous lane-change manoeuvres. For this reason it is necessary to detect the presence of other vehicles both in the blind spots and in the lanes adjacent to the lane onto which the vehicle is travelling. For the warning function it is also necessary to know the distance and the speed of the following vehicles, it order to evaluate if they are critical. It is important to remember that a high percentage of the accidents takes place in the following way: two vehicles follow parallel trajectories, one of these two changes lane and collides with the other vehicle.
As regards its functioning, the LCA system has preferably the following characteristics:
- it works on any kind of road, typically on more parallel lanes, with minimal bending radius which may be for example 125, 250 or 500 m (fig. 2.1) depending on the cases;
- it intervenes within a certain vehicle speed range, for example from a minimum speed of about 5 km/h, to a maximum speed corresponding to the limit allowed by the law (90 km/h for heavy trucks);
- it has to work in any weather condition, even the most difficult, for example fog, heavy showers, or snow, and in any lighting condition, even at night;
- it has to detect any type of vehicle.
The typical lane-change situations are those in figure 1: changing to the left, for overtaking or for driving in a column (fig. 1.1); changing to the right for ending an overtaking or for driving in a column (fig. 1.2); getting into the lane from a rest area, or lane changing when the one onto which the vehicle is travelling is blocked (1.3); keeping its lane when a vehicle overtakes on the lateral lane (fig.1.4), or when a vehicle is in the blind spot (fig. 1.5).

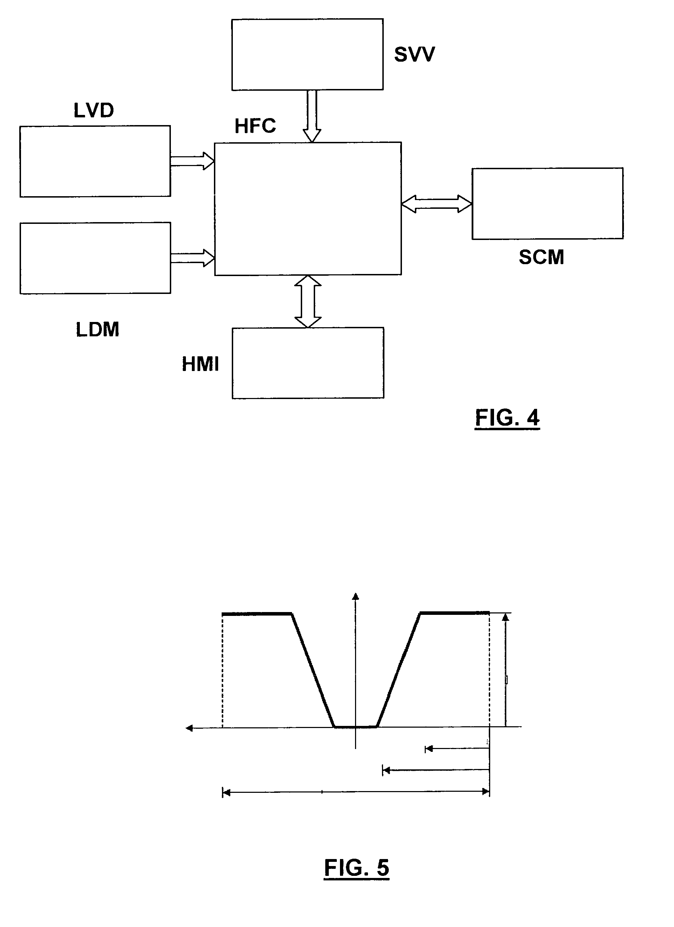

The LCA system presents a type of architecture as in Fig. 4.

A lane detection module LDM, comprising a visual system, constituted by a telecamera and an appropriate HW/SW, able to process the images and to detect the geometry of the road and the vehicle trajectory (see diagram in figure 2.2) with respect to the traffic lane.

A lateral detection module LVD, comprising a sensory system able to detect object in the adjacent lanes and to measure their position and speed.

A steering control module SCM, able to transfer the torque calculated by the functional control algorithms to the steering wheel, the steering box may be equipped with electric power steering, torque sensor and steering angle.

A vehicle data module SVV, able to provide the data regarding vehicular parameters, such as vehicle speed , yaw rate, lateral acceleration, steering angle, direction indicator, etc.

A control module of haptic reaction, comprising an electronic control unit which receives the input from the lane and the lateral detection modules and the vehicle data module, and provides a counteracting torque to be transmitted to the vehicle steering system.

A human-machine interface module HMI, which interfaces the driver with the LCA functionality.
More in particular, the lateral detection module LVD comprises one or more radars in order to carry out the lateral vision.
The lateral vision system detects the vehicles in the adjacent lanes.
The detection is based on the analysis of the movements of the detected objects: all the elements in the environment (road, houses, trees, parked cars, etc.) have a relative motion with an direction opposite to that of the vehicles that are overtaking.
The analysis is carried out by the radars and by their respective software in a specific portion of the image, corresponding to the immediately adjacent lane. This analysed area is dynamically adapted to the changes in the road geometry on the basis of the signals sent by the other sensors on the vehicle.
The radar provides the following measures:
- presence of objects in the adjacent lane, with an horizontal field of view i.e. of 40°;
- evaluation of the distance of the obstacle, with a maximum distance field of for example 100 m backwards (distance D in fig. 2.1);
- evaluation of the relative speed with respect to the vehicle approaching in the lateral lane.

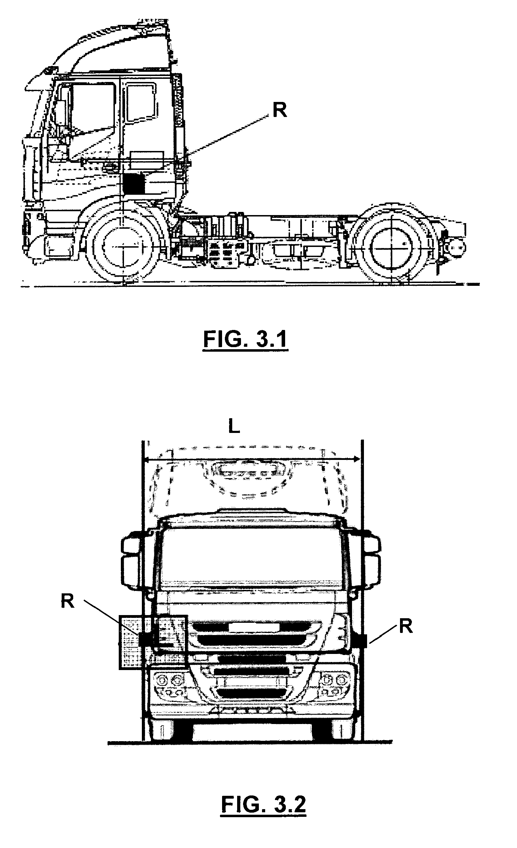

As regards its positioning, with reference to figures 3.1 and 3.2, the radar R is placed projecting from lateral wall of the vehicle, in order to guarantee an optimal functioning. Preferably there are two radars, one for each side, in order to control both the adjacent lanes, at an appropriate height that is not too far from the ground, preferably over the front wheel, at about 1.2 m on the cabin side, and pointed at the back of the vehicle, in order to optimize its pointing and its irradiation diagram.

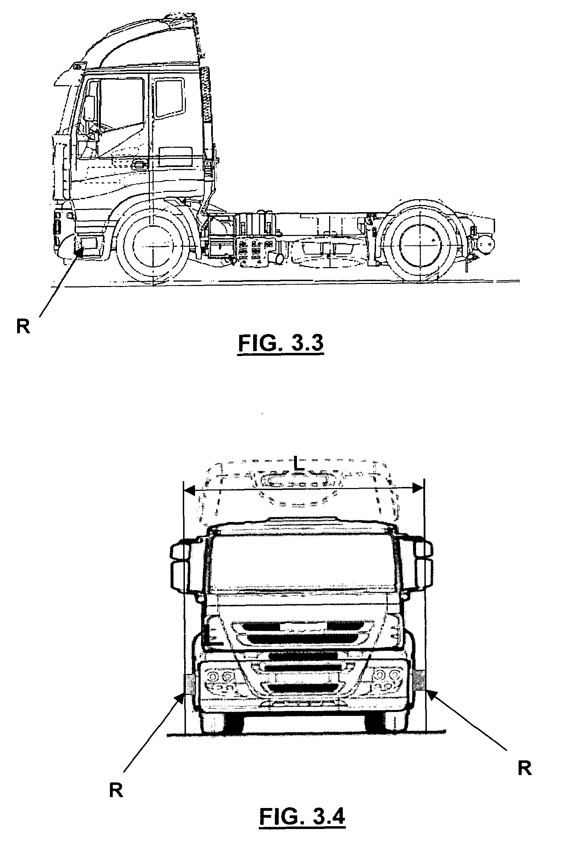

Figures 3.3 and 3.4 show another example of optimal positioning of the radar R, in the riser of the step of the side ladder used to get into the cabin. In this position the radar does not increase the lateral dimension L of the vehicle idling (at low speed).

Above a certain height from the ground, for example 2 m, its presence would not represent a problem and the existing laws on the maximum lateral dimensions of the stationary vehicle would allow its assembly. In this case, however, it would not function at its best, because it should be pointed in a fixed way with a certain angle shot with respect to its horizontal field of view, and its irradiation diagram would not be optimized.

On the contrary, the height from the ground mentioned above, with the vehicle stationary, may cause the vehicle to exceed the maximum width L allowed by the law, especially in the variant shown in figures 3.1, 3.2. For this reason the radar may be mounted on a support of the folding type, which allows to manually or automatically fold the radar when the vehicle is stationary or has a speed above the control intervention threshold. The folding mechanism may be for example of the same type as that adopted for the rear-view mirrors, having the care to realize a stop to the open position, for example of the snap type, because this position has to be very precise in order to allow its pointing function at its best.

The radar replaces the system known in the art of a video camera integrated in the rear-view mirror, removing the problems described above, improving the driving safety, because the traditional systems do not cover an area on the side of the vehicle, the so-called blind spot, and obtains a better lateral monitoring.

The control module of haptic reaction HFC performs an haptic reaction on the steering gear, that is it calculates a counteracting torque to be applied on the steering according to the detection of the positions of the other vehicles that are behind or at its sides. Moreover, it may control the presence or the absence of the driver's hands on the steering wheel, providing warning signals if it is necessary. Also, it controls the human-machine interface (HMI) module, as to appropriately inform the driver on emergency or dangerous situations by means of acoustic or optical warnings. The HFC module receives the data from the LDM, LVD and SVV modules, and sends the processed data to the SCM in order to request the torque, and to the HMI module in order to inform the driver.
The main signals used are:
- signals coming from the LDM:
   vehicle lateral displacement with respect to the right or left lane line;
   vehicle angle with respect to the central axis of the lane; bending of the road;
   kind of road boundary on the right and on the left;
- signals coming from the LVD:
   presence, position and speed of the vehicles in the adjacent lanes;
- signals coming from the SCM:
   torque applied by the driver to the steering gear; steering angle and speed;
- vehicular signals:
   speed, yaw level, lateral acceleration, direction, direction indicator.
The HFC module calculates the torque value to be requested to the steering controller SCM in order to warn the driver of an imminent danger during the lane-change manoeuvre. The calculation takes into consideration the presence of lateral vehicles and the position of the vehicle with respect to the middle of the lane and to the lane dimensions, and carries out a torque diagram as shown in fig. 5. Three zone types may be identified:
- non intervention zone wherein the torque is 0 - until the driver keeps the vehicle in the middle of the lane, far from the lane boundaries; in this condition, even though some vehicles approach laterally, LCA does not provide any haptic reaction to the driver by means of the steering;
- intermediate zone, wherein the torque request is a linear function of: maximum value of torque request, lane width, MAXintervention, NONinternvention.
   If the vehicle drifts towards the lane boundary, and a dangerous vehicle is present in the adjacent lanes, when the vehicle approaches a predetermined distance from the lane boundary, LCA applies a torque to the steering in order to provide a haptic reaction to the driver.
- maximum intervention zone, wherein the torque provided is the maximum torque request (MAX TORQUE REQUEST), when the vehicle travels in this "lateral" zone of the lane and a dangerous vehicle is present in the adjacent lanes.

The SCM module which applies the steering torque comprises preferably electronic control steering systems, and, for the application on heavy vehicles, the steering torque is preferably provided by a steering unit of the servo-assisted type with electronic control (EPS), coupled with a steering unit of the servo-assisted type with hydraulic control (HPS). The LCA is also suitable for performing out an "override" condition, which is a condition wherein the intervention of the LCA system is bypassed or cancelled in the following conditions:
torque applied by the driver exceeding the maximum torque provided by the LCA (MAX TORQUE REQUEST);
absolute value of the steering angle exceeding a certain threshold;
steering speed exceeding a certain threshold; lane width lower than a minimum value or higher than a maximum value;
vehicle out of the lane, for example over 0.30 m

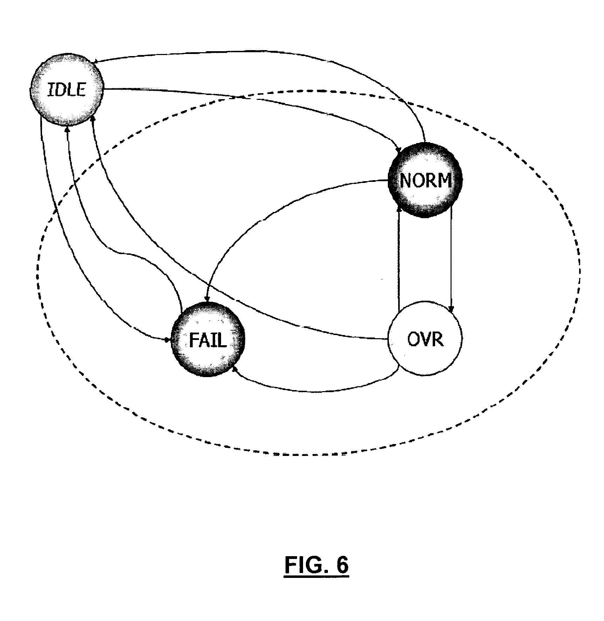

The embodiment of the software of the LCA system works on the basis of a finite state model, as shown in fig. 6.

Four finite states are possible:
IDLE is the initial operating state. When the vehicle is started (passing from ignition OFF to ignition ON) LCA is implicitly in IDLE, and LCA will be operating only after an explicit reactivation by the driver, and if all the reactivation conditions are verified. In this state the haptic control on the steering is disabled.

NORM is the normal operating state. When the vehicle is started (ignition state ON) LCA is on and is always enabled by means of the switching on of a switch by the driver. When the driver's request is received, if all the operating conditions are valid, the vehicle switches in NORM. In this state the haptic control on the steering is enabled. If the vehicle is in the middle of the lane, far from the boundaries, the haptic reaction on the steering is not requested, otherwise if the driver approaches the lane boundaries for a lane changing, and a relevant obstacle is present in the adjacent lane, LCA provides a counteracting torque to the steering in order to warn the driver of a danger.

LCA, by means of the LDM module, detects the beginning of a variation of the vehicle trajectory with respect to the middle of the lane, and therefore verifies if the driver, at the beginning of the lane-change manoeuvre, has or has not activated the direction indicator, and in this last case provides an acoustic or optical signal. Then it carries out the control of the lateral lane, verifying if it is or is not free, and calculating if the manoeuvre is or is not possible: if it is not possible, the system generates the counteracting torque to the steering wheel.

When the LCA system detects a dangerous situation, even though the direction indicators are activated, it applies the counteracting torque to the steering actuator of the SCM module, in order to induce the driver to keep travelling in the lane, and to avoid, this way, a dangerous lane changing.

The application of this torque opposes a resistance to the driver's tendency to change lane in terms of a resistant torque to the steering wheel. The active torque also provides an intuitive indication of the requested steering action that makes the vehicle come back within the boundaries of the desired lane.

As an additional functionality, the electronic processing means may comprise various other functions such as for example the signalling of other vehicles overtaking the stationary vehicle or the signalling of other vehicles overtaking at low speed for example lower than 25km/h, or the detection of vehicles approaching from behind at night.

The LCA system may provide acoustic or optical indications to the driver by means of the HMI module.

OVR is the override state wherein the LCA function is temporarily disabled. The system switches to OVR when one of the override conditions occur. The driver may enable or disable the LCA system at any time. The value of the torque applied to the steering by LCA is not high, so that at any time the driver may manually disable the LCA action by applying a higher torque to the steering. This situation may take place during an emergency manoeuvre, such as that for avoid a sudden obstacle.

FAIL is the check state of a failure or defect in the LCA system. The system switches to FAIL and maintains it until the failure ceases, than it goes back to IDLE. In FAIL the haptic control is disabled.

The functions described above may be realized by means of computer programs, that may run on one or more electronic processing means, integrated together or divided into cooperating different units. Said computer programs comprise code means suitable for performing one or more steps of the functions described above, when these programs are run on a computer. For this reason the scope of the present invention is meant to cover also said computer programs and the computer-readable media that comprise a recorded message, said computer-readable media comprising the program code means for performing one or more steps of the functions described above, when such program is run on a computer.

It will be apparent to the person skilled in the art that other alternative and equivalent embodiments of the invention can be conceived and reduced to practice without departing from the scope of the invention.

From the description set forth above it will be possible for the person skilled in the art to embody the invention with no need of describing further construction details. In particular the realization of the computer programs may be carried out on the basis of programming languages known in the art, of any of the types used in the application field of this invention.

## Claims

1. Vehicle lane changing assistance system for a vehicle, comprising:
a lane detection module (LDM), comprising a system able to process the images and to detect the geometry of the road and the vehicle trajectory with respect to the traffic lane;
a lateral detection module (LVD), comprising a radar system able to detect objects in the adjacent lanes and to measure their positions and speed;
a vehicle data module (SVV), able to detect the data on vehicular parameters;
a control module of haptic reaction (HFC), able to receive signals from said lane (LDM) and lateral (LVD) detection modules, and vehicle data module (SVV), and to provide a counteracting torque to be transmitted to the vehicle steering system.

2. Lane changing assistance system for a vehicle according to claim 1, wherein said radar system comprises one or more radars in order to obtain a lateral vision that detects the vehicles in the adjacent lanes; said detection being based on the analysis of the movements of the detected objects, the element in the environment having a relative motion with a direction opposite to that of the vehicles that are overtaking, said analysis being carried out in a specific portion of the image corresponding to the immediately adjacent lane, said analysed area being dynamically adapted to the changes of the road geometry detected by the system.

3. Lane changing assistance system for a vehicle according to claim 2, wherein said one or more radars are placed projecting,from the lateral wall of the vehicle, preferably one for each side, in order to control both the adjacent lanes, the right one and the left one, from an appropriate height from the ground, on the cabin side, preferably over the front wheel or in the riser of the step of the side ladder used to get into the cabin, pointed toward the back of the vehicle.

4. Lane changing assistance system for a vehicle according to claim 3, wherein said one or more radars comprise a support of the folding type, so that when the speed is lower that the control intervention threshold, or when the vehicle is stationary, tha radar may be manually or automatically folded.

5. Lane changing assistance system for a vehicle according to claim 4, wherein said support of the folding type is of the same type as that adopted for the rear-view mirrors of the vehicle, and comprising a stop position when opening, preferably of the snap type.

6. Lane changing assistance system for a vehicle according to claim 1, wherein said haptic reaction control module (HFC) provides said counteracting torque to be transmitted to the steering system of the vehicle according to a torque diagram that identifies three zone types of traffic lane:
- non intervention zone, where in the counteracting torque is zero until the vehicle stays in the middle of the lane;
- intermediate zone, wherein the counteracting torque is a linear function of a maximum value of the counteracting torque request, and of the lane width;
- maximum intervention zone, wherein the torque provided is the maximum, when the vehicle travels in this "lateral" zone of the lane and a dangerous vehicle is present in the adjacent lanes.

7. Lane changing assistance system for a vehicle according to claim 6, wherein said haptic reaction control module (HFC) is suitable for performing an "override" condition, that is a condition that bypasses or cancels the intervention of the system in conditions wherein:
a steering torque applied by the driver exceeds the maximum counteracting torque;
an absolute value of the steering angle exceeds a certain threshold;
the steering speed exceeds a certain threshold;
the lane width is lower than a minimum value or higher than a maximum value;
the vehicle is out of the lane.

8. Vehicle lane changing assistance system for a vehicle according to claim 1, further comprising:
a steering control module (SCM), able to transfer to the steering wheel said counteracting torque;
a human-machine interface module (HMI).

9. Lane changing assistance method for a vehicle, suitable for carrying out the functions of the system according to any of the previous claims, wherein said functions are carried out on the basis of a finite state model comprising the following states:
- IDLE state, initial operating state, which is implicitly maintained by the system, and which is left by the system after an explicit reactivation, and wherein the haptic reaction control is disabled;
- NORM state, state of normal functioning, wherein the functions according to any of the previous claims are carried out;
- OVR state, wherein the system performs said override function also on the basis of a command coming from an external element;
- FAIL state, state checking a failure or a defect, which is maintained until the failure is ceased, after that the system comes back to the IDLE state, in said FAIL state said haptic reaction control being disabled.

10. Computer program comprising program code means suitable for performing the steps of claim 9, when such program is run on a computer.

11. Computer-readable means comprising a recorded program, said computer-readable means comprising program code means suitable for performing the steps according to claim 9, when said program is run on a computer.
